Europäisches Patentamt

European Patent Office

Office européen des brevets

(11) Numéro de publication: **0 398 802**
**A1**

# (12) DEMANDE DE BREVET EUROPEEN

(21) Numéro de dépôt: **90401300.0**

(51) Int. Cl.⁵: **A23C 9/146, A23J 1/20**

(22) Date de dépôt: **16.05.90**

(30) Priorité: **19.05.89 FR 8906547**

(43) Date de publication de la demande:
**22.11.90 Bulletin 90/47**

(84) Etats contractants désignés:
**BE DE ES FR GB NL**

(71) Demandeur: **Union des Coopératives Laitières d'ISIGNY-SUR-MER et de SAINTE-MERE-EGLISE (Union de Coopératives Agricoles)**
**2, rue du Docteur Boutrois**
**F-14230 Isigny-sur-Mer(FR)**

(72) Inventeur: **Thibault, Philippe André**
**20 Square de la Motte-Piquet**
**F-75015 Paris(FR)**

(74) Mandataire: **Colas, Jean-Pierre et al**
**Cabinet de Boisse 37, avenue Franklin D. Roosevelt**
**F-75008 Paris(FR)**

(54) **Procédé d'élimination sélective et quantitative des lactoglobulines à partir d'une matière de départ contenant des protéines de lactosérum.**

(57) L'invention concerne un procédé d'élimination sélective et quantitative des lactoglobulines à partir d'une matière de départ contenant des protéinés de lactosérum, caractérisé en ce qu'on met en contact ladite matière de départ avec un échangeur d'anions de type fortement basique, le pH de ladite matière de départ étant compris entre 4 et 6 lorsque le taux de cendres de ladite matière de départ est compris entre 0 et au plus 1% en poids et entre 6 et 8 lorsque ledit taux de cendres est compris entre plus de 1%et 3% en poids, de manière à retenir sélectivement et quantitativement les lactoglobulines sur l'échangeur d'anions, on sépare l'échangeur d'anions sur lequel sont retenues les lactoglobulines du reste de ladite matière de départ, et on recueille ledit reste exempt de lactoglobulines.

Application à la production d'aliments lactés diététiques pour nourrissons.

EP 0 398 802 A1

**Procédé d'élimination sélective et quantitative des lactoglobulines à partir d'une matière de départ contenant des protéines de lactosérum.**

L'invention concerne un procédé d'élimination sélective et quantitative des lactoglobulines à partir d'une matière de départ contenant des protéines de lactosérum.

Les aliments lactés diététiques pour nourrissons sont souvent fabriqués à partir de protéines extraites de lait bovin. Afin de se rapprocher du lait humain, une formulation particulière des différents ingrédients du lait bovin est nécessaire et du seul point de vue des protéines, on doit veiller à ce que l'amino-gramme (et en particulier l'apport d'acides aminés essentiels tels que la thréonine, le tryptophane et la lysine) soit le plus proche possible de celui des protéines du lait humain.

Pour cela il est nécessaire, en particulier, de rééquilibrer le rapport Protéines de sérum/Caséines du lait bovin en faveur des protéines sériques. Les aliments lactés diététiques ainsi obtenus contiennent une forte proportion de protéines de lactosérum. Il se pose alors le problème suivant : les fractions protéiques des lactosérums humains et bovins n'ont pas la même composition ; en particulier, le lactosérum humain ne contient pas de bêta-lactoglobuline alors qu'environ la moitié de la fraction protéique du lactosérum bovin est représentée par de la bêta-lactoglobuline. Cette différence de composition est à l'origine de phénomènes d'allergie chez certains nourrissons lorsque ceux-ci sont alimentés avec des laits de composition à base de protéines sériques d'origine bovine. Cette allergie se manifeste notamment par des troubles digestifs (douleurs abdominales, diarrhées, vomissements).

Plusieurs propositions ont été formulées pour résoudre ce problème mettant en oeuvre, par exemple, la dénaturation thermique des protéines, l'hydrolyse totale des protéines en peptides très courts ou l'élimination quantitative des lactoglobulines.

La dénaturation thermique des protéines altère considérablement leur digestibilité.

L'hydrolyse totale des protéines est l'obtention de préparations ne contenant plus que des peptides et exemptes de protéines résiduelles. Cette hydrolyse peut être réalisée, soit par voie chimique (acide ou basique) soit par voie enzymatique. Dans le cas de l'hydrolyse enzymatique, il faut souvent utiliser plusieurs protéases de spécificités complémentaires (par exemple : trypsine, chymotrypsine, pepsine, papaïne, protéases bactériennes) pour atteindre le degré d'hydrolyse désiré ; les quantités d'enzymes à utiliser sont souvent importantes. Que l'hydrolyse soit chimique ou enzymatique, il reste souvent dans les préparations des protéines résiduelles non digérées parce que particulièrement résistantes à l'hydrolyse (en particulier, sérum albumine et immunoglobulines). Si on désire ne récupérer que des peptides, ces protéines doivent être éliminées par un traitement supplémentaire (précipitation-centrifugation, ultra-filtration).

L'élimination des lactoglobulines à partir de lactosérums a déjà fait l'objet de plusieurs travaux. Par exemple, l'élimination des lactoglobulines peut être entreprise en exploitant le fait que les lactoglobulines sont encore solbules dans des conditions où toutes les autres protéines sériques majeures ne le sont pas. Un procédé est ainsi proposé par KUWATA et Coll. (1985) (dans 3. Food Sci, V.50, N. 3 ; pp 605-609 : elimination of beta-lactoglobulin from whey to simulate human milk protein) : du chlorure ferrique est ajouté au lactosérum et le pH est ajusté à 3 ; toutes les protéines précipitent, à l'exception des lactoglobulines, le précipité est récupéré puis les ions ferriques sont éliminés soit par chromatographie d'échange d'ions, soit par ultra-filtration. Le concentré protéique obtenu ne contient pas de lactoglobulines. Ce procédé présente l'inconvénient d'altérer la digestibilité des protéines ainsi précipitées.

Un autre procédé étudié par CHIANCONE et GATTONI (EP-A-285 576) exploite la propriété qu'ont les lactoglobulines de s'associer en dimères dans certaines conditions : des lactoglobulines sont immobilisées sur un support puis on fait passer sur celui-ci le lactosérum dont on veut extraire les lactoglobulines; celles-ci sont éliminées sélectivement en s'associant aux lactoglobulines du support.

L'invention a pour but de fournir un procédé permettant d'extraire sélectivement et de manière quantitative les lactoglobulines à partir de matières de départ contenant des protéines de lactosérum, par rétention des lactoglobulines sur un échangeur d'anions dans des conditions opératoires appropriées.

Plus particulièrement, l'invention concerne un procédé d'élimination sélective et quantitative des lactoglobulines à partir d'une matière de départ contenant des protéines de lactosérum, caractérisé en ce qu'on met en contact ladite matière de départ avec un échangeur d'anions de type fortement basique, le pH de ladite matière de départ étant compris entre 4 et 6 lorsque le taux de cendres de ladite matière de départ est compris entre 0 et au plus 1% en poids et entre 6 et 8 lorsque ledit taux de cendres est compris entre plus de 1% et 3% en poids, de manière à retenir sélectivement et quantitativement les lactoglobulines sur l'échangeur d'anions, on sépare l'échangeur d'anions sur lequel sont retenues les lactoglobulines du reste de ladite matière de départ, et on recueille ledit reste exempt de lactoglobulines.

Le procédé de l'invention permet de retenir sélectivement toutes les lactoglobulines et de récupérer une préparation de protéines sériques exempte de lactoglobulines, en une seule opération et avec un seul type d'échangeur d'ions.

L'élimination des lactoglobulines peut être réalisée directement à partir de diverses matières de départ, telles que des lactosérums d'origines diverses : acides (pâtes fraîches, caséineries), doux (pâtes pressées). Ceux-ci peuvent être utilisés en l'état ou préalablement délipidés et/ou déminéralisés. On peut également adopter comme matière première de tels lactosérums, concentrés (extrait sec aux environs de 20%).

On peut aussi utiliser, comme matière de départ, des protéines extraites des différents lactosérums précités. On peut obtenir ces protéines à l'état plus ou moins puri fié par divers procédés : chromatographie par échange d'ions ou par filtration sur gel, précipitation, ultra-filtration. De toutes ces techniques, la plus appropriée car la plus économique et la plus employée industriellement est l'ultra-filtration. On obtient ainsi des préparations de protéines non dénaturées contenant 75 à 85% environ de matière protéique (par rapport à l'extrait sec). A partir de ces préparations de protéines purifiées (sèches ou hydratées), on réalise des solutions contenant, de préférence, environ 100 à 150 g de protéines par litre.

Les lactosérums ou les préparations de protéines reconstituées peuvent être utilisés en l'état ou, de préférence, après avoir été préalablement clarifiés par centrifugation ou par micro-filtration.

On veillera à la qualité microbiologique des matières premières ; en effet, certaines conditions opératoires (pH et température) sont favorables à des développements microbiens indésirables pour la qualité du produit fini. On pourra donc être amené à pratiquer, préalablement, sur la matière première, une opération de pasteurisation ou de stérilisation.

Dans le procédé de l'invention, on utilise un échangeur d'anions de type fortement basique. La dénomination "fortement basique" est bien connue des utilisateurs de résines échangeuses d'ions et suffit à les définir.

Pour les besoins de l'invention, tout échangeur d'anions de type fortement basique convient. Ces échangeurs portent habituellement des fonctions amines quaternaires. On peut citer, comme exemples non imitatifs, les résines suivantes :

* Celles à matrice d'agarose réticulé, comme le Q-Sepharose® commercialisé par PHARMACIA pour la séparation de protéines.

* Celles à matrice de dextrane réticulé, comme le QAE-Sephadex® commercialisé par PHARMACIA pour la séparation de protéines.

* Celles à matrice de polystyrène, comme les résines commercialisées par ROHM AND HAAS essentiellement pour la déminéralisation.

* Celles à matrice polyacrylique, comme les résines commercialisées par ROHM AND HAAS essentiellement pour la déminéralisation.

On peut noter que des résines échangeuses d'ions de tous types ont déjà été utilisées pour la séparation de protéines sériques mais les procédures adoptées avaient pour but la séparation de l'ensemble des protéines ou l'enrichissement en un type de protéine et ne pouvaient pas conduire à l'extraction sélective des lactoglobulines.

Citons les travaux suivants :

* Demande française de certificat d'addition No. 77 24162 (Rhône-Poulenc) :
Utilisation en série de résines échangeuses d'anions et de silices pour isoler l'ensemble des protéines de lactosérums.

*Brevet français No. 79 08555 (BEL) :
Utilisation d'un ou plusieurs types de résines pour séparer les protéines du lactosérum ou obtenir des fractions enrichies en une protéine particulière. Les procédures adoptées comprennent un pré-traitement et un post-traitement particuliers de la matière première.

Afin d'éliminer sélectivement les lactoglobulines de la substance contenant des protéines de lactosérum, il est nécessaire de respecter certaines conditions opératoires.

Un facteur déterminant pour la bonne conduite de l'opération d'échange d'ions, est notamment, la force ionique des préparations à traiter.

Pour retenir une protéine sur un échangeur d'anions, il faut que celle-ci porte une charge globale négative. Pour cela, il faut que le pH de la préparation soit supérieur au point isoélectrique de la protéine.

Cependant, cette condition n'est pas suffisante pour que la protéine soit retenue : en effet, la protéine est en compétition avec les autres espèces ioniques présentes dans la préparation (sels, en particulier) et cette compétition peut interdire la fixation de la protéine sur l'échangeur, même si celle-ci porte une charge globale convenable.

Si l'on ne veut pas retenir une protéine sur un échangeur d'anions, indépendamment de la présence d'autres espèces ioniques, il faut ajuster le pH de la préparation à une valeur inférieure ou égale au point

isoélectrique de la protéine.

Ce sont ces phénomènes qui sont exploités pour retenir sélectivement les lactoglobulines des préparations de protéines sériques.

En ce qui concerne les protéines sériques majeures, l'effet du pH de la préparation se manifeste de la façon suivante :

* pH inférieur à 4 : toutes les protéines sont chargées positivement et, ne peuvent pas, par conséquent, être retenues sur un échangeur d'anions.

* pH compris entre 4 et 6 : seules les lactoglobulines sont chargées négativement, les autres protéines sont chargées positivement, mais si la force ionique est trop élevée les lactoglobulines ne pourront pas se fixer sur l'échangeur.

* pH supérieur à 6 : toutes les protéines sériques majeures sont chargées négativement.

Pour retenir les lactoglobulines sur l'échangeur d'anions, il faut procéder de la façon suivante :

* si la force ionique (taux de sels) est élevée, il faut en compensation que les lactoglobulines soient très chargées ; pour cela, on choisira un pH relativement élevé (supérieur à 6)

* si la force ionique est faible, on choisira un pH inférieur à 6, mais non inférieur à 4.

Le taux de sels des matières de départ contenant des protéines sériques peut être corrélé au taux de cendres de ces matières et on procédera de la façon suivante :

* si le taux de cendres des matières de départ à traiter est compris entre 0 et 1% (0 et 10 g/l), comme c'est le cas de tous les lactosérums natifs, des solutions de préparations de protéines sériques purifiées par ultra-filtration et des lactosérums concentrés et déminéralisés, on règlera le pH de la préparation à traiter entre 4 et 6.

* si le taux de cendres des matières de départ à traiter est compris entre 1 et 3% (10 et 30 g/l), comme c'est le cas de tous les lactosérums concentrés non déminéralisés, on règlera le pH de la préparation à traiter entre 6 et 8.

La quantité de matière de départ que l'on peut mettre en contact avec l'échangeur dépend de sa concentration en lactoglobulines, d'autres caractéristiques de la matière de départ (extrait sec, taux de cendres) et de l'échangeur adopté.

Il est préférable de saturer l'échangeur en lactoglobulines, ceci permet de "chasser" les autres protéines qui se seraient éventuellement fixées et de les récupérer quantitativement dans le produit que l'on veut utiliser.

Généralement on peut retenir sur les échangeurs d'anions fortement basiques courants entre 5 et 15 grammes de lactoglobulines par litre d'échangeur, ce qui représente par litre d'échangeur environ 2 à 6 litres d'un lactosérum natif ou 0,5 à 1,5 litre d'un concentré de lactosérum, ou 15 à 45 grammes d'une préparation de protéines sériques purifiées sur la base de l'extrait sec.

La mise en contact de la matière de départ à traiter avec l'échangeur peut être réalisée selon les procédures bien connues de ce type de chromatographie ; on peut citer :

* Mélange en lit agité,

* Recirculation rapide sur une colonne d'échangeur,

* Progression dans une colonne d'échangeur de la préparation à traiter

Dans tous les cas, l'opération peut être réalisée à température ambiante (de l'ordre de 20°C), ou à froid (pour éviter les problèmes de contamination bactérienne). Une élévation de la température n'apporte rien.

La fixation des lactoglobulines sur l'échangeur est quasi instantanée, un temps de contact (temps de séjour) de quelques minutes est suffisant.

En fin d'opération, on récupère le produit traité, soit par simple filtration ou par centrifugation, ou en sortie de colonne dans le cas de l'adoption d'une configuration à lit fixe.

Le produit traité peut être utilisé directement ou bien préalablement concentré et/ou séché pour assurer sa bonne conservation.

Pour être ré-utilisé, l'échangeur doit subir un certain nombre d'opérations : élution des lactoglobulines et régénération.

Périodiquement, on pourra également appliquer des procédures de nettoyage.

Pour toutes ces opérations, on fera appel à des protocoles bien connus des utilisateurs d'échangeurs d'ions. Par exemple :

* Pour l'élution : utilisation d'une solution de force ionique élevée ; par exemple une solution aqueuse de chlorure de sodium 1M ou d'une solution d'acidité élevée (acide acétique 1M).

* Pour la régénération et le nettoyage : on fera appel aux procédures recommandées par les fournisseurs.

Afin de contrôler l'opération d'échange d'ions, il est nécessaire de pouvoir doser aisément les lactoglobulines. Ceci peut être réalisé efficacement par F.P.L.C. (Fast Protein Liquid Chromatography) en perméation sur gel en utilisant, par exemple, des colonnes de séparation garnies de Superose® 6 ou 12 commercialisées par PHARMACIA.

Les fractions éluées sont analysées par mesure de la densité optique à 280 nm.

Les différentes protéines sériques majeures sont bien séparées dans un tampon phosphate 50 mM, pH 7,0 et on peut observer sans difficulté la présence ou l'absence de lactoglobulines.

L'ordre de sortie des protéines sériques majeures est le suivant (du plus petit temps de rétention au plus grand) : Lipoprotéines, Immunoglobulines, Sérum albumine, Lactoglobulines, Lactalbumine.

Une autre méthode très efficace pour contrôler la présence ou l'absence des lactoglobulines est le dosage immunologique. Il faut pour cela disposer d'anti-corps anti-lactoglobulines. L'association des lactoglobulines et de ces anti-corps conduit à la formation d'un précipité qui permet de visualiser la présence de lactoglobulines.

Les exemples non limitatifs suivants sont donnés afin d'illustrer l'invention.

Les exemples 1 à 4 illustrent l'application de l'invention à différentes matières de départ ; les exemples 5 et 6 illustrent l'utilisation de différents types d'échangeurs d'ions.

Exemples 1 à 4 :

Dans ces exemples, l'échangeur d'ions utilisé est le Q-Sépharose® (Pharmacia). Les matières de départ traitées et les conditions opératoires sont résumées dans le Tableau 1.

La mise en contact de l'échangeur et de la préparation à traiter est effectuée par mélange sous agitation modérée à température ambiante pendant 15 mn. En fin d'opération, la préparation traitée est séparée de l'échangeur par filtration sur verre fritté. L'échangeur est rincé à l'eau puis les lactoglobulines sont éluées par rinçage à l'aide d' une solution molaire de chlorure de sodium.

L'échangeur est ensuite rincé à l'eau puis équilibré à l'aide d'un tampon phosphate 50 mM pour une nouvelle utilisation.

Une analyse F.P.L.C. montre que les préparations de protéines obtenues sont exemptes de lactoglobulines et que l'on récupère quantitativement toutes les autres protéines sériques majeures.

Cette observation est confirmée par la pureté élevée de la fraction lactoglobulines récupérée.

Exemple 5 :

Le pH d'un lactosérum natif de caséinerie est ajusté à 5,0 puis on pratique une clarification par centrifugation.

Deux litres du lactosérum ainsi préparé sont mis en contact avec un litre de résine échangeuse d'ions de type polystyrénique (AIOI Duolite® commercialisée par Rohm and Haas) par recirculation rapide sur un lit fixe de résines, à température ambiante, pendant 30 mn, puis séparés de la résine.

Le lactosérum obtenu est exempt de lactoglobulines et a conservé toutes ses autres protéines majeures.

L'élution des lactoglobulines et la régénération de la résine sont effectuées par rinçage de l'échangeur à l'aide de deux litres d'une solution normale d'acide chlorhydrique.

Le résine est ensuite abondamment lavée à l'eau pour une nouvelle utilisation.

Exemple 6 :

Le pH d'un lactosérum natif de caséinerie est ajusté à 5,0 puis on pratique une clarification par centrifugation. Six litres de lactosérum ainsi préparé sont mis en contact avec un litre d'échangeur QAE-Sephadex® (Pharmacia) par brassage modéré à 20° C pendant 15 minutes.

La préparation traitée est ensuite séparée de l'échangeur par filtration sur verre fritté.

La lactosérum obtenu est exempt de lactoglobulines et a conservé toutes ses autres protéines majeures.

Les lactoglobulines sont éluées à l'aide d'une solution molaire de chlorure de sodium puis le gel échangeur est équilibré à l'aide d'un tampon phosphate 50 mM pour une nouvelle utilisation.

TABLEAU 1

| (Exemples 1 à 4) | | | |
|---|---|---|---|
| | Matière de départ | Traitement de la matière de départ avant sa mise en contact avec l'échangeur d'anions | Quantité traitée (l/l d'échangeur) |
| Exemple 1 | Lactosérum de caséinerie natif | Ajustement du pH à 5.0 | 4 |
| | | Clarification par centrifugation | |
| Exemple 2 | Lactosérum de pâte pressée concentré (22,6 % d'ES*) MAT TFR ID = 12/012>** = 14,6 % de l'ES | Ajustement du pH à 7.0 | 0,5 |
| | | Clarification par centrifugation | |
| Exemple 3 | Lactosérum de pâte pressée concentré (21,3 % d'ES) MAT = 15,4 % de l'ES et déminéralisé (cendres = 0,9 % de l'ES) | Ajustement du pH à 5.0 | 1 |
| | | Clarification par centrifugation | |
| Exemple 4 | Solution à 10 % dans l'eau d'une poudre de protéines de lactosérum purifiées à 75 % par ultra-filtration | Ajustement du pH à 5,0 | 0,5 |

* ES = extrait sec
** MAT = Matières azotées totales

EP 0 398 802 A1

**Revendications**

1. Procédé d'élimination des lactoglobulines à partir d'une matière de départ contenant des protéines de lactosérum, dans lequel on met en contact ladite matière de départ avec un échangeur d'anions de type fortement basique, caractérisé en ce qu'on met en contact la quantité suivante de matière de départ par litre d'échangeur d'anions :

2 à 6 litres de lactosérum natif, ou

0,5 à 1,5 litre d'un concentré de lactosérum, ou

15 à 45 grammes d'une préparation de protéines sériques purifiées sur la base de l'extrait sec, le pH de ladite matière de départ étant compris entre 4 et 6 lorsque le taux de cendres de ladite matière de départ est compris entre 0 et au plus 1% en poids et entre 6 et 8 lorsque ledit taux de cendres est compris entre plus de 1%et 3% en poids, de manière à retenir sélectivement et quantitativement les lactoglobulines sur l'échangeur d'anions, on sépare l'échangeur d'anions sur lequel sont retenues les lactoglobulines du reste de ladite matière de départ, et on recueille ledit reste exempt de lactoglobulines.

2. Procédé selon la revendication 1, caractérisé en ce que la matière de départ est choisie parmi les lactosérums natifs, les lactosérums concentrés et déminéralisés, et les solutions de préparations de protéines sériques et en ce que le pH de ladite matière est compris entre 4 et 6.

3. Procédé selon la revendication 1, caractérisé en ce que la matière de départ est un lactosérum concentré non déminéralisé et en ce que le pH de ladite matière est compris entre 6 et 8.

4. Procédé selon la revendication 2 ou 3, caractérisé en ce que la matière de départ est clarifiée par centrifugation ou microfiltration avant d'être mise au contact de l 'échangeur d' anions.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | FR-A-2 452 881 (FROMAGERIES BEL)<br>* Exemple 1; page 4, lignes 6-15 *<br>--- | 1,3 | A 23 C    9/146<br>A 23 J    1/20 |
| X | FR-A-2 487 642 (FROMAGERIES BEL)<br>* Exemples 3,4 *<br>--- | 1-3 | |
| X | EP-A-0 189 611 (V. SANCHEZ et al.)<br>* Exemple 1 *<br>--- | 1,2 | |
| D,X | US-A-4 229 342 (B. MIRABEL)<br>* Exemples 3,5,7; colonne 4, lignes 11-18 * & FR-A-2 399 214 | 1,2 | |
| Y | --- | 4 | |
| Y | JOURNAL OF FOOD SCIENCE, vol. 51, no. 4, juillet-août 1986, pages 919-923, Chicago, IL, US; C.M. BARKER et al.: "Composition and properties of spherosil-QMA whey protein concentrate"<br>* Page 919, colonnes 1,2 *<br>--- | 4 | |
| X | GB-A-2 188 526 (AGRICULTURAL AND FOOD RESEARCH COUNCIL)<br>* Exemple 1; page 1, ligne 118 - page 2, ligne 22 *<br>--- | 1,2,4 | **DOMAINES TECHNIQUES RECHERCHES (Int. Cl.5)**<br><br>A 23 C<br>A 23 J |
| X | CHEMISTRY AND INDUSTRY, no. 21, 7 novembre 1983, pages 810-814, London, GB; P.J. SKUDDER: "Recovery and fractionation of proteins from cheese whey using a porous silica-based ion-exchange medium"<br>* Page 810, colonne 2 - page 811, colonne 2; figure 5; tableaux 2,3 *<br>---                              -/- | 1,2 | |

Le présent rapport a été établi pour toutes les revendications

| Lieu de la recherche | Date d'achèvement de la recherche | Examinateur |
|---|---|---|
| LA HAYE | 01-08-1990 | DESMEDT G.R.A. |

Office européen
des brevets

Numero de la demande

**RAPPORT DE RECHERCHE EUROPEENNE**

EP 90 40 1300

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | JOURNAL OF DAIRY RESEARCH, vol. 59, no. 1, 1985, pages 167-181; P.J. SKUDDER: "Evaluation of a porous silica-based ion-exchange medium for the production of protein fractions from rennet- and acid-whey" * Pages 169,174-175; figure 6 * | 1,2 | |
| P,X | EP-A-0 320 152 (EXPRESS FOODS GROUP) * Claims 1,11; exemple 2 * | 1,3 | |
| | | | DOMAINES TECHNIQUES RECHERCHES (Int. Cl.5) |

Le présent rapport a été établi pour toutes les revendications

| Lieu de la recherche | Date d'achèvement de la recherche | Examinateur |
|---|---|---|
| LA HAYE | 01-08-1990 | DESMEDT G.R.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0402)